# EUROPÄISCHE PATENTSCHRIFT

(11) **EP 1 268 040 B1**
(45) Veröffentlichungstag und Bekanntmachung des Hinweises auf die Patenterteilung: **12.01.2005**
(21) Anmeldenummer: 01942327.6
(22) Anmeldetag: 09.01.2001
(51) Int. Cl.: B01D 53/86, B01J 29/06, C01B 21/40

(54) **VERFAHREN ZUR BESEITIGUNG VON NOx UND N2O AUS DEM RESTGAS DER SALPETERSÄUREPRODUKTION**
METHOD FOR THE REMOVAL OF NOx AND N2O FROM THE RESIDUAL GAS OF NITRIC ACID PRODUCTION
PROCEDE POUR L'ELIMINATION DES NOx ET N2O CONTENUS DANS LE GAZ RESIDUEL DE LA PRODUCTION D'ACIDE NITRIQUE

(30) Priorität: 14.01.2000 DE 10001541
(43) Veröffentlichungstag der Anmeldung: 02.01.2003
(73) Patentinhaber: Uhde GmbH, 44141 Dortmund (DE)
(72) Erfinder: SCHWEFER, Meinhard, 44141 Dortmund (DE); MAURER, Rainer, 58332 Schwelm (DE); TUREK, Thomas, 76133 Karlsruhe (DE); KÖGEL, Markus, 67354 Römerberg (DE)
(74) Vertreter: Ackermann, Joachim, Dr.
(86) Internationale Anmeldenummer: PCT/EP2001/000157
(87) Internationale Veröffentlichungsnummer: WO 2001/051182

(56) Entgegenhaltungen:
- EP-A- 0 564 144
- WO-A-97/10042
- WO-A-99/34901
- US-A- 4 571 329
- KAPTEIJN F ET AL: "HETEROGENEOUS CATALYTIC DECOMPOSITION OF NITROUS OXIDE" APPLIED CATALYSIS B: ENVIRONMENTAL,AMSTERDAM,NL, Bd. 9, 1996, Seiten 25-64, XP000987028 in der Anmeldung erwähnt
- KAPTEIJN F ET AL: "KINETIC ANALYSIS OF THE DECOMPOSITION OF NITROUS OXIDE OVER ZSM-5 CATALYSTS" JOURNAL OF CATALYSIS,ACADEMIC PRESS, DULUTH, MN,US, Bd. 167, 1997, Seiten 256-265, XP000979359 ISSN: 0021-9517 in der Anmeldung erwähnt

## Beschreibung

Die vorliegende Erfindung betrifft ein Verfahren zur Beseitigung von NOx und N₂O aus dem Restgas der Salpetersäureproduktion.

Bei der industriellen Herstellung von Salpetersäure HNO₃ durch die katalytische Verbrennung von Ammoniak resultiert ein mit Stickstoffmonoxid NO, Stickstoffdioxid NO₂ (zusammen bezeichnet als NOx) sowie Lachgas N₂O beladenes Abgas. Während NO und NO₂ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Maße auch Lachgas in den Focus des Umweltschutzes, da dieses in nicht unerheblichem Maße zum Abbau von stratosphärischem Ozon und zum Treibhauseffekt beiträgt.

Nach Reduzierung der Lachgasemissionen der Adipinsäureindustrie stellt die Salpetersäureproduktion die größte Quelle industrieller Lachgasemissionen dar. Es besteht daher aus Gründen des Umweltschutzes ein dringender Bedarf an technischen Lösungen, die Lachgasemissionen zusammen mit den NOx-Emissionen bei der Salpetersäureproduktion zu reduzieren.

Zur Beseitigung von NOx aus dem Abgas der Salpetersäureproduktion bestehen zahlreiche Verfahrensvarianten (hier bezeichnet als DeNOx-Stufe), wie chemische Wäsche, Adsorptionsverfahren oder katalytische Reduktionsverfahren. Eine Übersicht ist in Ullmann's Encyclopedia of Industrial Chemistry, Vol. A 17, VCH Weinheim (1991) (D1) gegeben. Hervorzuheben ist dabei die selektive katalytische Reduktion (SCR) von NOx mittels Ammoniak zu N₂ und H₂O, welche je nach Katalysator bei Temperaturen von ca. 150°C bis ca. 450°C ablaufen kann und einen NOx-Abbau von mehr als 90% ermöglicht. Sie ist die meist genutzte Variante der NOx-Minderung bei der Salpetersäureproduktion, führt aber, wie auch die übrigen Varianten, nicht zu einer Minderung des N₂O-Gehaltes.

Hierzu ist nach heutigem Stand der Technik eine gesonderte, zweite Katalysatorstufe notwendig, die in geeigneter Weise mit der DeNOx-Stufe kombiniert wird.

Diese Überlegung ist beispielsweise Grundlage eines in US-A-5,200,162 beschriebenen Verfahrens, welche die Zersetzung von N₂O in einem ebenfalls NOx enthaltenden Abgas nachgeschaltet einer DeNOx-Stufe beansprucht. Dabei wird zumindest ein Teilstrom des Abgases, welches die N₂O-Zersetzungsstufe verläßt, abgekühlt und in diese zurückgeführt, um eine Überhitzung dieser Stufe aufgrund der Exothermie der N₂O-Zersetzung zu vermeiden. Die Erfindung bezieht sich auf Abgase mit einem N₂O-Gehalt bis zu 35Vol%, also beispielsweise auf Abgase der Adipinsäureherstellung.

Ein von Shell präsentiertes Verfahren beschreibt die integrierte Beseitigung von NOx und N₂O im Restgas der Salpetersäureproduktion (Clark, D.M.; Maaskant, O.L.; Crocker, M., The Shell DeNOx System: A novel and cost effective NOx removal technology as applied in nitric acid manufacture and associated processes, presented at Nitrogen '97, in Geneva, 9-11^{th} February 1997, (D2)).

Das Shell Reaktor System basiert auf einem sogenannten Lateral-Flow-Reaktor-Prinzip, wobei die DeNOx -Stufe schon bei relativ geringen Temperaturen (ab 120°C) arbeitet. Zur Entfernung von N₂O wird ein amorpher Metalloxidkatalysator verwendet.

Bei einer Anordnung entsprechender Katalysatoren im Restgas, welches den Absorptionsturm mit einer Temperatur von 20-30°C verläßt, ist das Fenster möglicher Arbeitstemperaturen durch die Betriebstemperatur der Restgasturbine vorgegeben.

Die Restgasturbine nämlich sollte aus technischer und wirtschaftlicher Sicht des Gesamtprozesses am vorteilhaftesten bei Eintrittstemperaturen <550°C und möglichst hohen ΔT und Δp betrieben werden.

Dies ist insbesondere für die Beseitigung von N₂O von Bedeutung, da hierfür nach dem heutigen Stand der Technik deutlich höhere Temperaturen als bei der katalytischen Reduktion von NOx notwendig sind. Die Wirtschaftlichkeit dieser Option ist daher an eine ausreichende Katalysatoraktivität geknüpft.

Eine Übersicht über die zahlreichen Katalysatoren, deren prinzipielle Eignung zur Zersetzung und Reduktion von Lachgas nachgewiesen wurde wird in Kapteijn F.; Rodriguez-Mirasol, J.; Moulijn, J.A., Appl. Cat. B: Environmental 9 (1996) 25-64, (D3) gegeben.

Als besonders geeignet zur Zersetzung von N₂O erscheinen u.a. metallausgetauschte Zeolith-Katalysatoren (US-A-5,171,553).

Die hier verwendeten Zeolithe werden durch Ionenaustausch in einer wässrigen, Metallsalze enthaltenden Lösung hergestellt. Zum Ionenaustausch werden Metalle aus der Gruppe: Kupfer, Kobalt, Rhodium, Iridium, Ruthenium oder Palladium verwendet. Die Kupfer-Zeolithe sind sehr empfindlich gegenüber Wasserdampf und büßen unter solchen Bedingungen schnell ihre Aktivität ein (M.; Sandoval, V.H.; Schwieger, W.; Tissler, A.; Turek, T., Chemie Ingenieur Technik 70 (1998) 878-882, (D5)). während die anderen hier aufgeführten Metalle relativ kostenintensiv sind.

Mit einem Eisen-dotierten Zeolith vom Typ Fe-ZSM5 wurde unter entsprechenden Bedingungen ,wie in Tabelle 1 in US-A-5,171,553 beschrieben, in Abwesenheit von NOx, H₂O und O₂ bei 450 °C nur ein 20%iger Abbau von N₂O erreicht.

Im Falle von Fe-ZSM-5 wird dessen Aktivät zum Abbau von N₂O in Gegenwart entsprechender Mengen NO jedoch deutlich erhöht, was auf eine Reaktion unter Bildung von NO₂ gemäß NO + N₂O ---> N₂ + NO₂ zurückgeführt wird, welche von Fe-ZSM-5 katalysiert wird (Kapteijn F.; Marban, G.; Rodrigeuez-Mirasol, J.; Moulijn, J.A., Journal of Catalysis 167 (1997) 256-265, (D6); Kapteijn F.; Mul, G.; Marban, G.; Rodrigeuez-Mirasol, J.; Moulijn, J.A., Studies in Surface Science and Catalysis 101 (1996) 641-650, (D7)).

Bei Abwesenheit von NOx wurde für Cu oder Co-ausgetauschte Zeolithe eine höhere Aktivität festgestellt als bei den entsprechenden Fe-Zeolithen.

In den im Stand der Technik präsentierten Darstellungen (D6, D7) zum Abbau von N₂O in Gegenwart eines Fe-ZSM-5-Katalysators bei 400°C werden üblicherweise äquimolare Mengen NO und N₂O verwendet. Gemäß D6 und D7 nimmt der Effekt von NOx auf den N₂O-Abbau mit sinkendem NO/N₂O-Verhältnis beständig ab, so daß bei einem NO/N₂O-Verhältnis unter 0,5 der N₂O-Abbau nicht mehr zufriedenstellend ist

Die besten Ergebnisse werden bei einem Molverhältnis NO/N₂O von 1 oder größer 1 beobachtet.

Bei Einsatz eines solchen Katalysators zur N₂O-Reduktion im Abgas der Salpetersäureproduktion könnte entsprechend den Autoren das gebildete NO₂ in den Prozeß zur Gewinnung von HNO₃ zurückgeführt werden. Die NOx- und N₂O-Konzentrationen im Abgas liegen hierbei je nach Verfahrensvariante bei ca. 1000 ppm.

Eisenhaltige Zeolithe basierend auf Ferrierit zur Reduktion von N₂O-haltigen Gasen sind Gegenstand von WO 99/34901. Die hier eingesetzten Katalysatoren enthalten 80-90% Ferrierit sowie weitere bindende Anteile. Der Wasseranteil der zu reduzierenden Gase liegt im Bereich von 0,5 bis 5%. Bei einem Vergleich verschiedener Zeolith-Typen wurden mit Zeolithen vom FER (Ferrierit)-Typ beim Abbau von N₂O bei Temperaturen von 375 bis 400°C die besten Ergebnisse erzielt (97% N₂O-Abbau bei 375°C und NO/N₂O = 1). Ein wesentlich geringerer Abbau wurde bei Verwendung von Zeolithen vom Pentasil (MFI)- oder Mordenit (MOR)-Typ beobachtet. Bei eisenhaltigen MFI-Zeolithen konnte unter obigen Bedingungen sogar nur ein maximaler N₂O-Abbau von 62 % erreicht werden.

Ein weiteres Verfahren zur Beseitigung von NOₓ und N₂O im Restgas der Salpetensäureproduktion wird in WO-A-9710042 beschrieben, wobei eine eisenhaltige Zeolithe für die N₂O Zersetzung verwendet wird.

Im Hinblick auf den bekannten Stand der Technik ergibt sich somit die Aufgabe, insbesondere für die HNO₃-Produktion ein wirtschaftliches Verfahren zur Verfügung zu stellen, das neben einem hohen NOx-Abbau auch einen zufriedenstellenden N₂O-Abbau ermöglicht.

Insbesondere sollen auch bei einem unterstöchiometrischen NOx/N₂O-Verhältnis, insbesondere bei einem Verhältnis < 0,5, vorzugsweise < 0,1, wie diese nach Reduzierung des NOx-Gehaltes resultieren, gute Ergebnisse für den N₂O-Abbau erzielt werden.

Die vorliegende Erfindung löst diese Aufgabe und betrifft ein Verfahren zur Minderung der NOx- und N₂O-Konzentration aus dem Restgas der Salpetersäureproduktion, wobei das den Absorptionsturm verlassende Restgas vor Eintritt in die Restgasturbine durch eine Kombination zweier Stufen geführt wird, in der ersten Stufe der NOx-Gehalt (DeNOx-Stufe) durch ein katalytisches Reduktionsverfahren reduziert wird und in der zweiten Stufe der N₂O-Gehalt (DeN₂O-Stufe) des Gases reduziert wird, das NOx/N₂O-Verhältnis vor Eintritt des Gases in die zweite Stufe im Bereich von 0,001 bis 0,5, vorzugsweise im Bereich von 0,001 bis 0,2, insbesondere im Bereich von 0,01 bis 0,1 und dieses Gas in der zweiten Stufe in Kontakt mit einem Katalysator gebracht wird, welcher im wesentlichen einen oder mehrere mit Eisen beladenen Zeolithe enthält, wobei der Betriebsdruck in der zweiten Stufe 4 bis 12 bar beträgt.

Erfindungsgemäß verwendete Katalysatoren enthalten im wesentlichen, vorzugsweise > 50 Gew%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des MFI- oder MOR-Typs, in dem erfindungsgemäß verwendeten Katalysator enthalten sein. Darüberhinaus kann der erfindungsgemäß verwendete Katalysator weitere dem Fachmann bekannte Zusatzstoffe, wie z.B. Bindemittel enthalten.

Die für die DeN₂O-Stufe eingesetzten Katalytoren basieren vorzugsweise auf Zeolithen, in die durch einen Festkörper-lonenaustausch Eisen eingebracht wurde. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appl. Catal. 184, (1999) 249-256; EP-A-0 955 080). Die erhaltenen Katalysatorpulver werden anschließend in einem Kammerofen an der Luft bei Temperaturen im Bereich von 400 bis 600 °C kalziniert. Nach dem Kalzinieren werden die Fe-Zeolithe in destilliertem Wasser intensiv gewaschen und nach Abfiltrieren des Zeolithen getrocknet. Abschließend werden die so erhaltenen Fe-Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilicate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10%. Insbesondere eignen sich hier Zeolithe vom Typ MFI, BETA, FER, MOR und/oder MEL. Genaue Angaben zum Aufbau oder Struktur dieser Zeolithe werden im Atlas of Zeolithe Structure Types, Elsevier, 4^{th} revised Edition 1996, gegeben. Erfindungsgemäß bevorzugte Zeolithe sind vom MFI (Pentasil)- oder MOR (Mordenit)-Typ. Insbesondere bevorzugt sind Zeolithe vom Fe-ZSM-5 Typ.

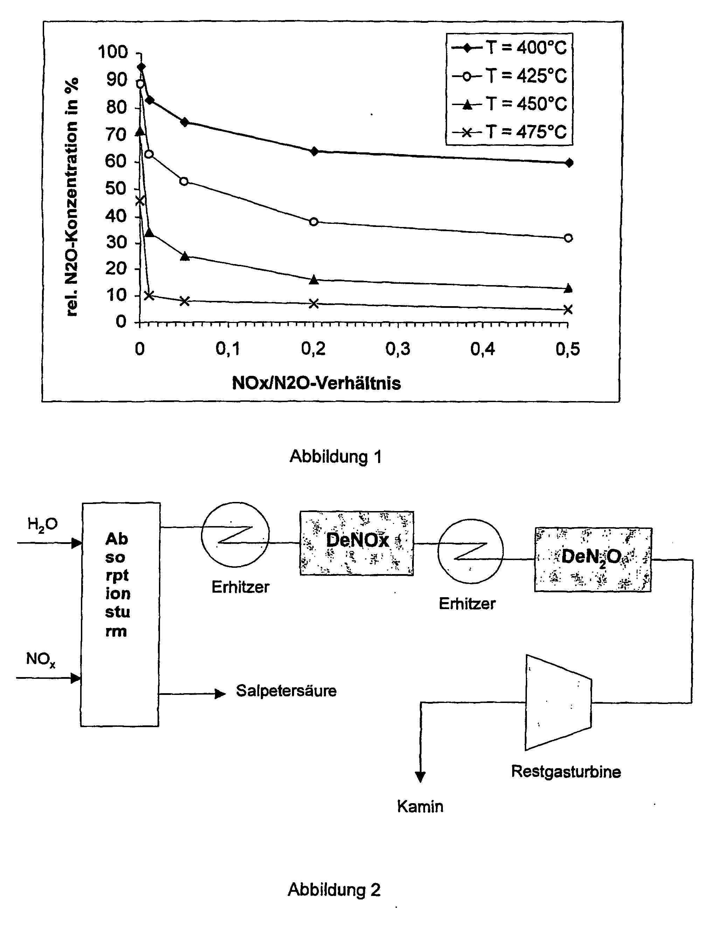

Gemäß der vorliegenden Erfindung werden DeN₂O-Katalysatoren in Kombination mit einer vorgeschalteten DeNOx-Stufe so zwischen dem Absorptionsturm und der Restgasturbine angeordnet, daß das den Absorptionsturm verlassende Restgas zunächst bei Temperaturen von < 400 °C, insbesondere < 350 °C, in einen Reaktor (erste Stufe) geleitet wird, in dem der NOx-Gehalt des Gases bis auf < 100 ppm reduziert wird (vgl. Abbildung 2). Der Betriebsdruck dieser ersten Stufe liegt vorzugsweise bei 1 bis 15 bar, insbesondere bei 4 bis 12 bar.

Die vorgeschaltete DeNOx-Stufe entspricht einem üblicherweise in Salpetersäureanlagen entsprechend dem Stand der Technik eingesetztem Verfahren zur Minderung der NOx-Emissionen. Der NOx-Gehalt des Restgases muß aber noch hoch genug sein, damit die cokatalytischen Effekte von NO oder NO₂ in der nachgeschalteten DeN₂O-Stufe wirksam werden können.

Bei Betrieb der DeN₂O-Stufe ohne vorgeschaltete DeNOx. d.h. bei einem Eingangsstrom mit in etwa äquimolaren Mengen an NO und N₂O, ist eine Rückführung des gemäß NO + N₂O -> N₂ + NO₂ gebildeten NO₂ in den HNO₃-Prozeß aufgrund der relativ geringen NO₂-Konzentration von <2000 ppm unwirtschaftlich.

Der N₂O-Gehalt des Gases bleibt in der DeNOx-Stufe im wesentlichen unverändert. So weist das Gas nach Verlassen der ersten Stufe üblicherweise einen NOx-Gehalt von 1 bis 200 ppm, vorzugsweise 1 bis 100 ppm, insbesondere 1 bis 50 ppm, und einen N₂O-Anteil von 200 bis 2000 ppm. vorzugsweise 500 bis 1500 ppm auf. Nach Verlassen der DeNOx-Stufe resultiert ein NOx/N₂O-Verhältnls von 0,001 bis 0,5, vorzugsweise 0.001 bis 0,2, insbesondere 0.01 is 0,1. Der Wassergehalt des Gases liegt nach Verlassen sowohl vor des Absorptionsturmes der DeNOx-Stufe, als auch der DeN₂O-Stufe üblicherweise im Bereich von 0,05 bis 1%, vorzugsweise im Bereich von 0,1 bis 0.8%, insbesondere im Bereich von 0.1 bis 0.5%.

Das so konditionierte Restgas wird nun in die nachgeschaltete DeN₂O-Stufe geleitet, wo unter Ausnutzung eines cokatalytischen Effektes von NOx in Gegenwart des entsprechenden Zeolith-Katalysators ein Abbau des N₂O In N₂ und O₂ bewirkt wird.

Es wurde überraschender Weise gefunden, daß in Gegenwart der gemäß der Erfindung verwendeten eisenhaltigen Zeolith-Katalysatoren der N₂O-Abbau auch in Anwesenheit geringer Mengen an NOₓ, d.h. bei einem molaren NOₓ/N₂O-Verhältnis < 0,5 drastisch erhöht wird (vgl. Abbildung 1). Ein Effekt, der sich mit zunehmender Temperatur deutlich verstärkt. So ist gemäß der vorliegenden Erfindung beispielsweise bei 450°C ein molares NOₓ/N₂O-Verhältnis von 0,01 noch ausreichend, um in Gegenwart eines Fe-ZSM-5-Katalysators, die N₂O-Konzentration von 72% auf 33% abzusenken. Dies ist umso erstaunlicher, als im Stand der Technik der beschleunigte N₂O-Abbau auf die bereits erwähnte stöchiometrische Umsetzung von N₂O mit NO zurückgeführt wird. NOₓ scheint bei hinreichender Temperatur und kleinem NOₓ/N₂O-Verhältnis die Rolle eines homogenen Cokatalysators zu übernehmen, welcher den N₂O Abbau gemäß N₂O → N₂ + 1/2 O₂ beschleunigt. Bei einem NOₓ/N₂O-Verhältnis in den vorstehend genannten Grenzen ist ein maximaler Abbau von N₂O in der nachgeschalteten DeN₂O-Stufe möglich. Sobald das Verhältnis unter 0,001 abfällt, sinkt auch der N₂O-Abbau auf nicht mehr zufriedenstellende Werte ab (vergleiche Beispiel 5). Nach Verlassen der DeN₂O-Stufe liegt der Gehalt an N₂O nach dem erfindungsgemäßen Verfahren im Bereich von 0 bis 200 ppm, vorzugsweise im Bereich von 0 bis 100 ppm, insbesondere im Bereich von 0 bis 50 ppm.

Dabei wird die Betriebstemperatur der DeN₂O-Stufe insbesondere bestimmt durch den gewünschten Abbaugrad an N₂O und die im Restgas enthaltene Menge an NOₓ, ist aber auch, wie dem Fachmann bekannt ist und wie nahezu alle Prozesse der katalytischen Abgasreinigung, in weitem Umfang abhängig von der Katalysatorbelastung, d.h. von dem auf die Katalysatormenge bezogenen Durchsatz an Abgas. Vorzugsweise liegt die Betriebstemperatur der zweiten Stufe im Bereich von 300 bis 550 °C, insbesondere im Bereich von 350 bis 500°C, bei einem Druck im Bereich von 1 bis 15 bar, insbesondere 4 bis 12 bar. Mit steigendem Druck verstärkt sich die cokatalytische Wirkung von NOₓ auf die N₂O Zersetzung, so dass durch Druckerhöhung eine weitere Absenkung der Betriebstemperatur ermöglicht wird.

Desweiteren ist der Gehalt an Sauerstoff und H₂O, der je nach Betriebsweise und Verfahrensvariante der Salpetersäureproduktion in gewissen Grenzen schwanken kann und eine inhibierende Wirkung auf den N₂O-Umsatz ausübt, bei Ermittlung bzw. Festlegung der Betriebstemperatur zu berücksichtigen. Der O₂-Gehalt liegt im Bereich von 1 bis 5 Vol.% insbesondere im Bereich von 1,5 bis 4 Vol.%.

Mit den gemäß der Erfindung verwendeten eisenhaltigen Zeolith-Katalysatoren läßt sich damit bei Temperaturen im Bereich von 300 bis 550 °C, vorzugsweise 350 bis 500 °C ein Abbau von N₂O von > 90%, insbesondere > 95% erzielen. Mit steigender Temperatur ist es möglich, auch bei einem NOₓ/N₂O-Verhältnis von 0,01 noch einen zufriedenstellenden N₂O-Abbau zu erreichen.

Das erfindungsgemäße Verfahren ermöglicht es durch Kombination einer DeNOx-Stufe und einer DeN₂O-Stufe den NOₓ- und N₂O-Gehalt des Restgases bei der Salpetersäureherstellung bis auf minimale Werte zu reduzieren. Durch Anordnung der DeNOx-Stufe vor der DeN₂O-Stufe und zwischen Absorptionsturm und Restgasturbine ist das erfindungsgemäße Verfahren auf Grund des monoton ansteigenden Temperaturprofils außerdem sehr wirtschaftlich.

Ferner ist die Prozeßführung bei einer Anordnung beider Stufen vor der Dekompressionsturbine besonders vorteilhaft, da beide Stufen unter Druck (je nach HNO₃-Verfahrensvariante zwischen 4 und 11 bar) betrieben werden können, was eine Reduzierung des effektiv notwendigen Reaktor- bzw. Katalysatorvolumens bedingt.

Durch Betrieb der DeNOx-Stufe bereits bei relativ niedrigen Temperaturen ist darüberhinaus auch beim Anfahren der Anlage, bei dem nur wenig Prozeßwärme zur Verfügung steht, eine hinreichende Minderung des NOₓ-Gehaltes gewährleistet.

Ein weiterer Vorteil der Anordnung beider Stufen zwischen Absorptionsturm und Restgasturbine in einem monoton steigenden Temperaturprofil liegt darin, daß das die erfindungsgemäße Kombination verlassende Restgas ohne vorherige Abkühlung und ohne weitere Maßnahmen zur Abgasreinigung direkt der Restgasturbine zur optimalen Rückgewinnung der Kompressions- und Wärmeenergie zugeführt werden kann.

### Beispiele:

### DeNOx-Stufe:

Vorgeschaltet dem DeN₂O-Katalysator kam als DeNOx-Katalysator ein klassischer SCR-Katalysator auf V₂O₅-WO₃-/TiO₂ Basis (vgl. etwa G. Ertl, H. Knözinger J. Weitkamp: Handbook of Heterogeneous Catalysis, Band 4, Seiten 1633-1668) wie beschrieben unter Verwendung von NH₃ als Reduktionsmittel zum Einsatz. Dieser wurde betrieben bei einer Temperatur von 350°C. In Abhängigkeit von der zugeführten Menge an NH₃ wurden am Ausgang der DeNOx-Stufe verschiedene Gehalte an NOₓ und damit NOₓ/N₂O-Verhältnisse eingestellt.

### DeN₂O-Stufe:

Die Herstellung eines eisenhaltigen MFI-Katalysators erfolgte durch Festkörperlonentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A Tißler, T. Turek, Appl. Catal. 184 (1999) 249-256.

Die Katalysatorpulver wurden an der Luft für 6h bei 823 K kalziniert, gewaschen und über Nacht bei 383 K getrocknet. Nach Zusatz entsprechender Binder folgte die Extrusion zu zylindrischen Katalysatorkörpem (2x2mm).

Die Versuche wurden in einer stationär betriebenen Durchflußapparatur mit online Analytik bei einer Raumgeschwindigkeit von jeweils 10.000 h⁻¹ durchgeführt.
Die Zusammensetzung des Feed betrug:

| | |
|---|---|
| 1000 ppm | NOx |
| 1000 ppm | N₂O |
| 0,5% vol | H₂O |
| 2,5% vol | O₂ |
| Rest | N₂ |

Durch Variation der zugesetzten Menge an NH₃ konnten folgende Restkonzentrationen an NOₓ und N₂O erhalten werden:

| Beispiel | zugesetzte Menge NH₃ | Resultierende NOₓ-Konzentration (nach DeNOx-Stufe bei 350°C) | Resultiemdes NOₓ/N₂O-Verhältnis (nach DeNOx-Stufe) | Resultierende N₂O-Konzentration (nach DeN₂O-Stufe bei 475°C) |
|---|---|---|---|---|
| 1 | 500 ppm | 500 ppm | 0,5 | 40 ppm |
| 2 | 800 ppm | 200 ppm | 0,2 | 54 ppm |
| 3 | 950 ppm | 50 ppm | 0,05 | 81 ppm |
| 4 | 990 ppm | 10 ppm | 0,01 | 99 ppm |
| 5 | 1000 ppm | <1 ppm | <0,001 | 462 ppm |

Wie den oben angeführten Beispielen zu entnehmen ist, ist ein hoher N₂O-Abbau bis zu einem NOₓ/N₂O-Verhältnis von 0,001, insbesondere 0,01 möglich. Sinkt das Verhältnis unter diesen Grenzwert ab, so ist ein hinreichender Abbau nicht mehr gewährleistet, auf Grund der nicht mehr ausreichenden cokatalytischen Funktion von NOₓ.

## Patentansprüche

1. Verfahren zur Minderung der NOₓ- und N₂O-Konzentration aus dem Restgas der Salpetersäureproduktion, wobel das den Absorptionsturm verlassende Restgas vor Eintritt in die Restgasturbine durch eine Kombination zweier Stufen geführt wird und in der ersten Stufe der NOₓ-Gehalt durch ein katalytisches Reduktionsverfahren reduziert wird und in der zweiten Stufe der N₂O-Gehalt des Gases durch Zersetzung in Stickstoff und Sauerstoff reduziert wird, das molare NOₓ/N₂O-Verhältnis vor Eintritt des Gases in die zweite Stufe im Bereich von 0,001 bis 0,5 liegt und dieses Gas in der zweiten Stufe in Kontakt mit einem Katalysator gebracht wird, welcher einen oder mehrere mit Eisen beladene Zeolithe enthält, wobei der Betriebsdruck in der zweiten Stufe 4 bis 12 bar beträgt.

2. Verfahren nach Anspruch 1, **dadurch gekennzeichnet, daß** der oder die im Katalysator enthaltenen mit Eisen beladenen Zeolithe vom Typ MFI, BEA, FER, MOR und/oder MEL sind.

3. Verfahren nach Anspruch 2, dadurch gekennzelchnet, daß der oder die mit Eisen beladenen Zeolith vom Typ MFI sind.

4. Verfahren nach Anspruch 3, **dadurch gekennzeichnet, daß** der Zeolith ein Fe-ZSM-5 ist.

5. Verfahren nach mindestens einem der vorhergehenden Ansprüche, **dadurch gekennzeichnet, daß** die Temperatur der ersten Stufe <400 °C ist, vorzugsweise <350 °C.

6. Verfahren nach mindestens einem der vorhergehenden Ansprüche, **dadurch gekennzeichnet, daß** die Temperatur der zweiten Stufe im Bereich von 300 und 550 °C, vorzugsweise im Bereich von 350 und 500°C, liegt.

7. Verfahren nach mindestens einem der vorhergehenden Ansprüche, **dadurch gekennzeichnet, daß** die Temperatur der ersten Stufe <350 °C ist und daß die Temperatur der zweiten Stufe im Bereich von 350 und 500 °C liegt.

8. Verfahren nach mindestens einem der vorhergehenden Ansprüche, **dadurch gekennzeichnet, daß** das molare NOₓ/N₂O-Verhältnis vor Eintritt des Gases in die zweite Stufe im Bereich von 0,001 bis 0,2 liegt.

9. Verfahren nach mindestens einem der vorhergehenden Ansprüche, **dadurch gekennzeichnet, daß** beide Stufen bei einem Druck im Bereich von 4 bis 12 bar betrieben werden.

10. Verfahren nach mindestens einem der vorhergehenden Ansprüche, **dadurch gekennzeichnet, daß** die erste Stufe nach dem SCR-Verfahren betrieben wird.

11. Verfahren nach mindestens einem der vorhergehenden Ansprüche, **dadurch gekennzeichnet, dass** ein Restgas nach Verlassen des Absorptionsturms und vor Eintritt in die erste oder zweite Stufe zum Einsatz kommt, dessen Wassergehalt im Bereich von 0,05 bis 1 Vol%, insbesondere im Bereich von 0,1 bis 0,8 Vol%, liegt.

12. Verfahren nach mindestens einem der vorhergehenden Ansprüche, **dadurch gekennzeichnet, daß** ein Restgas vor Eintritt in die zweite Stufe zum Einsatz kommt, dessen NOₓ-Gehalt im Bereich von 1 bis 200 ppm liegt und dessen N₂O-Gehalt im Bereich von 500 bis 2000 ppm liegt.

## Claims

1. Process for reducing the NOₓ concentration and N₂O concentration from the residual gas from nitric acid production, where the residual gas leaving the absorption column is passed, prior to entry into the residual gas turbine, through a combination of two stages, the first stage reducing the NOₓ content by means of a catalytic reduction process and the second stage reducing the N₂O content of the gas by means of decomposition into nitrogen and oxygen, and where the molar NOₓ/N₂O ratio prior to entry of the gas into the second stage is in the range from 0.001 to 0.5, and in the second stage this gas is brought into contact with a catalyst which comprises one or more iron-loaded zeolites, the operating pressure in the second stage being from 4 to 12 bar.

2. Process according to Claim 1, **characterized in that** the iron-loaded zeolite(s) present in the catalyst are of MFI, BEA, FER, MOR and/or MEL type.

3. Process according to Claim 2, **characterized in that** the iron-loaded zeolite(s) are of MFI type.

4. Process according to Claim 3, **characterized in that** the zeolite is an Fe-ZSM-5.

5. Process according to at least one of the preceding claims, **characterized in that** the temperature of the first stage is < 400°C, preferably < 350°C.

6. Process according to at least one of the preceding claims, **characterized in that** the temperature of the second stage is in the range from 300 to 550°C, preferably in the range from 350 to 500°C.

7. Process according to at least one of the preceding claims, **characterized in that** the temperature of the first stage is < 350°C and **in that** the temperature of the second stage is in the range from 350 to 500°C.

8. Process according to at least one of the preceding claims, **characterized in that** the molar NOₓ/N₂O ratio prior to entry of the gas into the second stage is in the range from 0.001 to 0.2.

9. Process according to at least one of the preceding claims, **characterized in that** both stages are operated at a pressure in the range from 4 to 12 bar.

10. Process according to at least one of the preceding claims, **characterized in that** the first stage is operated using the SCR process.

11. Process according to at least one of the preceding claims, **characterized in that** a residual gas whose water content is in the range from 0.05 to 1% by volume, in particular in the range from 0.1 to 0.8% by volume, after leaving the absorption column and prior to entry into the first or second stage is used.

12. Process according to at least one of the preceding claims, **characterized in that** a residual gas whose NOₓ content is in the range from 1 to 200 ppm and whose N₂O content is in the range from 500 to 2000 ppm prior to entry into the second stage is used.

## Revendications

1. Procédé pour la réduction de la concentration en NOx et en N₂O dans les gaz résiduels de la fabrication d'acide nitrique, le gaz résiduel sortant de la tour d'absorption est conduit avant d'entrer dans la turbine de gaz résiduel à travers une combinaison de deux étages et la teneur en NOx est réduite dans le premier étage au moyen d'un procédé de réduction catalytique et la teneur en N₂O dans le gaz est réduite dans le second étage par décomposition en azote et en oxygène, le rapport molaire NOx/N₂O avant l'entrée du gaz dans le second étage se trouve dans le domaine de 0,001 à 0,5 et ce gaz est mis en contact dans le second étage avec un catalyseur qui renferme une ou plusieurs zéolites chargées de fer, la pression de service dans le second étage est de 4 à 12 bars.

2. Procédé selon la revendication 1 **caractérisé en ce que** la ou les zéolites chargées de fer contenues dans le catalyseur sont de type MFI, BEA, FER, MOR et/ou MEL.

3. Procédé selon la revendication 2, **caractérisé en ce que** la ou les zéolites chargées de fer contenues dans le catalyseur sont de type MFI.

4. Procédé selon la revendication 3, **caractérisé en ce que** la zéolite est une Fe-ZSM-5.

5. Procédé selon au moins l'une des revendications précédentes, **caractérisé en ce que** la température du premier étage est <400°C, de préférence <350°C.

6. Procédé selon au moins l'une des revendications précédentes, **caractérisé en ce que** la température du second étage se situe dans le domaine entre 300 et 550°C, de préférence dans le domaine entre 350 et 500°C.

7. Procédé selon au moins l'une des revendications précédentes, **caractérisé en ce que** la température du premier étage est <350°C et la température du second étage se situe dans le domaine entre 350 et 500°C.

8. Procédé selon au moins l'une des revendications précédentes, **caractérisé en ce que** le rapport molaire NOx/N₂O avant l'entrée du gaz dans le second étage se situe dans le domaine de 0,001 à 0,2.

9. Procédé selon au moins l'une des revendications précédentes, **caractérisé en ce que** les deux étages opèrent sous une pression de 4 à 12 bars.

10. Procédé selon au moins l'une des revendications précédentes, **caractérisé en ce que** le premier étage opère selon le procédé SCR.

11. Procédé selon au moins l'une des revendications précédentes, **caractérisé en ce qu'**on utilise après la sortie de la tour d'absorption et avant l'entrée dans le premier ou le second étage, un gaz résiduel, dont la teneur en eau se situe dans le domaine de 0,05 à 1 % vol., en particulier dans le domaine de 0,1 bis 0,8 % vol.

12. Procédé selon au moins l'une des revendications précédentes, **caractérisé en ce qu'**on utilise avant l'entrée dans le second étage un gaz résiduel dont la teneur en NOx se situe dans le domaine de 1 à 200 ppm et la teneur en N₂O se situe dans le domaine de 500 à 2000 ppm.
